# EUROPEAN PATENT APPLICATION

(11) **EP 1 986 112 A1**
(43) Date of publication of application: **29.10.2008**
(21) Application number: 08162533.7
(22) Date of filing: 22.11.2000
(51) Int. Cl.: G06F 17/30

(54) **Method for providing a summary of data**

(30) Priority: 23.11.1999 US 447941; 23.11.1999 US 448624; 23.11.1999 US 449421
(62) Divisional of application: 08153773.0
(71) Applicant: Accenture LLP, Palo Alto, CA 94304 (US)
(72) Inventor: Marpe, James S., Westport, MN 06880 (US); Coyle, David, Alpharetta, GA 30022 (US); Kiene, Bruce, P., Mesa, AZ 85213 (US); Chestnut, Gregory, P., Boothwyn, PA 19061 (US); Durocher, John, F., Dedham, MA 02026 (US); Adler, Scott, R., Boston, MA 02116 (US); Farner Laura, L., Mt. Lebanon, PA 15228 (US); Backes, Karen, L., Minneapolis, MN 55409 (US); Gouzie, Suzanne, M., Charlestown, MA 02129 (US); Christensen, Alan, R., Houston, TX 77006 (US); Rininger, Christopher, A., Minneapolis, MN 55405 (US)
(74) Representative: TBK-Patent

(57) **Abstract**

A method for providing a summary of data relating to a merger or acquisition via an interface to a database comprises identifying a plurality of issues relating to a merger or acquisition, determining a plurality of milestones associated with the merger or acquisition, identifying a plurality of projects corresponding to the merger or acquisition, gauging a progress of the projects in terms of a plurality of criterion and outputting the issues, the milestones, and the gauged progress of the projects.

## Description

### Field of Invention

The present invention relates to browsing data using a data browser and more particularly pertains to facilitating the navigation of application specific data with a data browser using a plurality of links.

### Background of the Invention

In the past, instructional databases have been commonly used to provide users with a plethora of information. Such information may be used to execute various tasks or enable the users to accomplish a goal. Often, such instructional databases may be stored on a centralized server and provide access to a plurality of client computers via a network. In some instances, such network is the Internet in which case the database is accessed via a web site.

Such prior art instructional databases, however, often utilize a conventional hypertext system which makes it particularly difficult to navigate the information in a progression that the original designers intended without sacrificing the ability of the user to freely navigate the information. Further, none of such prior art instructional databases allow an effective exchange of ideas in order to achieve a goal at hand.

Still yet another feature that the prior art instructional databases lack is the ability to track a progression of an effort to achieve an intended goal. Finally, the prior art instructional databases have never been used to facilitate a merger and acquisition situation.

### Summary of Invention

A system, method, and article of manufacture are provided for facilitating the navigation of application specific data on a data page, i.e. web page, during use of a data browser, i.e. Netscape, MS Explorer, etc. Included on the data page are a plurality of links each corresponding to data. In use, the data may be retrieved upon selection of the corresponding link. To facilitate the navigation of the data, the links are displayed each as a component of an indicia such as a pointer or chevron to imply a relationship between the data.

In one embodiment of the present invention, the aforementioned relationship is a progressional relationship and the indicia implies a direction of progressional movement through the data. In order to imply direction, the indicia may take the form of a chevron or any other type of pointer that implies direction. As an option, each of the components of indicia may also be shaped as a chevron.

In yet another embodiment of the present invention, a currently selected link is visually differentiated with respect to the remaining links. This may be accomplished by highlighting a currently selected link. Further, the links may be continuously displayed with the data in order to continuously imply the progressional relationship and a current location among the data.

### Description of Drawings

The foregoing and other objects, aspects and advantages are better understood from the following detailed description of a preferred embodiment of the invention with reference to the drawings, in which:
**Figure 1** is a schematic diagram of the present invention;
**Figure 2** is an illustration of a Navigation Chevron in accordance with one embodiment of the present invention;
**Figure 3** is an illustration of a knowledge database topic page in accordance with one embodiment of the present invention;
**Figure 4** is an illustration showing the use of nested Navigation Chevrons in accordance with one embodiment;
**Figure 5** is a block diagram of a Discussion Database in accordance with one embodiment of the present invention; and
**Figure 6** is an illustration of a Discussion Database Interface Page in accordance with one embodiment of the present invention.

### Detailed Description

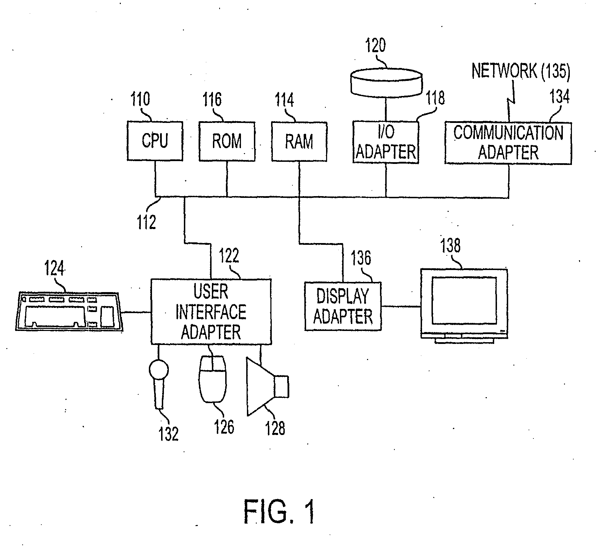

In accordance with at least one embodiment of the present invention, a single entry point is provided for merger/acquisition participants to access related information and deliverables utilizing Intranet technology. Entry may be accomplished using a hardware implementation such as is illustrated in Figure 1. Further, various functional and user interface features of the present invention may be enabled using software programming, i.e. object oriented programming (OOP).

### Hardware Overview

A representative hardware environment of a preferred embodiment of the present invention is depicted in Figure 1, which illustrates a typical hardware configuration of a workstation having a central processing unit **110**, such as a microprocessor, and a number of other units interconnected via a system bus **112**. The workstation shown in Figure **1** includes Random Access Memory (RAM) **114**, Read Only Memory (ROM) **116**, an I/O adapter **118** for connecting peripheral devices such as disk storage units **120** to the bus **112**, a user interface adapter **122** for connecting a keyboard **124**, a mouse **126**, a speaker **128**, a microphone **132**, and/or other user interface devices such as a touch screen (not shown) to the bus **112**, communication adapter **134** for connecting the workstation to a communication network (e.g., a data processing network) and a display adapter **136** for connecting the bus **112** to a display device **138**. The workstation typically has resident thereon an operating system such as the Microsoft Windows NT or Windows/95 Operating System (OS), the IBM OS/2 operating system, the MAC OS, or UNIX operating system.

### Software Overview

Object oriented programming (OOP) has become increasingly used to develop complex applications. As OOP moves toward the mainstream of software design and development, various software solutions require adaptation to make use of the benefits of OOP. A need exists for the principles of OOP to be applied to a messaging interface of an electronic messaging system such that a set of OOP classes and objects for the messaging interface can be provided.

OOP is a process of developing computer software using objects, including the steps of analyzing the problem, designing the system, and constructing the program. An object is a software package that contains both data and a collection of related structures and procedures. Since it contains both data and a collection of structures and procedures, it can be visualized as a self-sufficient component that does not require other additional structures, procedures or data to perform its specific task. OOP, therefore, views a computer program as a collection of largely autonomous components, called objects, each of which is responsible for a specific task. This concept of packaging data, structures, and procedures together in one component or module is called encapsulation.

In general, OOP components are reusable software modules which present an interface that conforms to an object model and which are accessed at run-time through a component integration architecture. A component integration architecture is a set of architecture mechanisms which allow software modules in different process spaces to utilize each other's capabilities or functions. This is generally done by assuming a common component object model on which to build the architecture. It is worthwhile to differentiate between an object and a class of objects at this point. An object is a single instance of the class of objects, which is often just called a class. A class of objects can be viewed as a blueprint, from which many objects can be formed.

OOP allows the programmer to create an object that is a part of another object. For example, the object representing a piston engine is said to have a composition-relationship with the object representing a piston. In reality, a piston engine comprises a piston, valves and many other components; the fact that a piston is an element of a piston engine can be logically and semantically represented in OOP by two objects.

OOP also allows creation of an object that "depends from" another object. If there are two objects, one representing a piston engine and the other representing a piston engine wherein the piston is made of ceramic, then the relationship between the two objects is not that of composition. A ceramic piston engine does not make up a piston engine. Rather it is merely one kind of piston engine that has one more limitation than the piston engine; its piston is made of ceramic. In this case, the object representing the ceramic piston engine is called a derived object, and it inherits all of the aspects of the object representing the piston engine and adds further limitation or detail to it. The object representing the ceramic piston engine "depends from" the object representing the piston engine. The relationship between these objects is called inheritance.

When the object or class representing the ceramic piston engine inherits all of the aspects of the objects representing the piston engine, it inherits the thermal characteristics of a standard piston defined in the piston engine class. However, the ceramic piston engine object overrides these ceramic specific thermal characteristics, which are typically different from those associated with a metal piston. It skips over the original and uses new functions related to ceramic pistons. Different kinds of piston engines have different characteristics, but may have the same underlying functions associated with them (e.g., how many pistons in the engine, ignition sequences, lubrication, etc.). To access each of these functions in any piston engine object, a programmer would call the same functions with the same names, but each type of piston engine may have different/overriding implementations of functions behind the same name. This ability to hide different implementations of a function behind the same name is called polymorphism and it greatly simplifies communication among objects.

With the concepts of composition-relationship, encapsulation, inheritance and polymorphism, an object can represent just about anything in the real world. In fact, the logical perception of the reality is the only limit on determining the kinds of things that can become objects in object-oriented software. Some typical categories are as follows:
- Objects can represent physical objects, such as automobiles in a traffic-flow simulation, electrical components in a circuit-design program, countries in an economics model, or aircraft in an air-traffic-control system.
- Objects can represent elements of the computer-user environment such as windows, menus or graphics objects.
- An object can represent an inventory, such as a personnel file or a table of the latitudes and longitudes of cities.
- An object can represent user-defined data types such as time, angles, and complex numbers, or points on the plane.

With this enormous capability of an object to represent just about any logically separable matters, OOP allows the software developer to design and implement a computer program that is a model of some aspects of reality, whether that reality is a physical entity, a process, a system, or a composition of matter. Since the object can represent anything, the software developer can create an object which can be used as a component in a larger software project in the future.

If 90% of a new OOP software program consists of proven, existing components made from preexisting reusable objects, then only the remaining 10% of the new software project has to be written and tested from scratch. Since 90% already came from an inventory of extensively tested reusable objects, the potential domain from which an error could originate is 10% of the program. As a result, OOP enables software developers to build objects out of other, previously built objects.

This process closely resembles complex machinery being built out of assemblies and subassemblies. OOP technology, therefore, makes software engineering more like hardware engineering in that software is built from existing components, which are available to the developer as objects. All this adds up to an improved quality of the software as well as an increase in the speed of its development.

Programming languages are beginning to fully support the OOP principles, such as encapsulation, inheritance, polymorphism, and composition-relationship. With the advent of the C++ language, many commercial software developers have embraced OOP. C++ is an OOP language that offers a fast, machine-executable code. Furthermore, C++ is suitable for both commercial-application and systems-programming projects. For now, C++ appears to be the most popular choice among many OOP programmers, but there is a host of other OOP languages, such as Smalltalk, Common Lisp Object System (CLOS), and Eiffel. Additionally, OOP capabilities are being added to more traditional popular computer programming languages such as Pascal.

The benefits of object classes can be summarized, as follows:
- Objects and their corresponding classes break down complex programming problems into many smaller, simpler problems.
- Encapsulation enforces data abstraction through the organization of data into small, independent objects that can communicate with each other. Encapsulation protects the data in an object from accidental damage, but allows other objects to interact with that data by calling the object's member functions and structures.
- Subclassing and inheritance make it possible to extend and modify objects through deriving new kinds of objects from the standard classes available in the system. Thus, new capabilities are created without having to start from scratch.
- Polymorphism and multiple inheritance make it possible for different programmers to mix and match characteristics of many different classes and create specialized objects that can still work with related objects in predictable ways.
- Class hierarchies and containment hierarchies provide a flexible mechanism for modeling real-world objects and the relationships among them.
- Libraries of reusable classes are useful in many situations, but they also have some limitations. For example:

- Complexity. In a complex system, the class hierarchies for related classes can become extremely confusing, with many dozens or even hundreds of classes.
- Flow of control. A program written with the aid of class libraries is still responsible for the flow of control (i.e., it must control the interactions among all the objects created from a particular library). The programmer has to decide which functions to call at what times for which kinds of objects.
- Duplication of effort. Although class libraries allow programmers to use and reuse many small pieces of code, each programmer puts those pieces together in a different way Two different programmers can use the same set of class libraries to write two programs that do exactly the same thing but whose internal structure (i.e., design) may be quite different, depending on hundreds of small decisions each programmer makes along the way. Inevitably, similar pieces of code end up doing similar things in slightly different ways and do not work as well together as they should.

Class libraries are very flexible. As programs grow more complex, more programmers are forced to reinvent basic solutions to basic problems over and over again. A relatively new extension of the class library concept is to have a framework of class libraries. This framework is more complex and consists of significant collections of collaborating classes that capture both the small scale patterns and major mechanisms that implement the common requirements and design in a specific application domain. They were first developed to free application programmers from the chores involved in displaying menus, windows, dialog boxes, and other standard user interface elements for personal computers.

Frameworks also represent a change in the way programmers think about the interaction between the code they write and code written by others. In the early days of procedural programming, the programmer called libraries provided by the operating system to perform certain tasks, but basically the program executed down the page from start to finish, and the programmer was solely responsible for the flow of control. This was appropriate for printing out paychecks, calculating a mathematical table, or solving other problems with a program that executed in just one way.

The development of graphical user interfaces began to turn this procedural programming arrangement inside out. These interfaces allow the user, rather than program logic, to drive the program and decide when certain actions should be performed. Today, most personal computer software accomplishes this by means of an event loop which monitors the mouse, keyboard, and other sources of external events and calls the appropriate parts of the programmer's code according to actions that the user performs. The programmer no longer determines the order in which events occur. Instead, a program is divided into separate pieces that are called at unpredictable times and in an unpredictable order. By relinquishing control in this way to users, the developer creates a program that is much easier to use. Nevertheless, individual pieces of the program written by the developer still call libraries provided by the operating system to accomplish certain tasks, and the programmer must still determine the flow of control within each piece after it's called by the event loop. Application code still "sits on top of" the system.

Even event loop programs require programmers to write a lot of code that should not need to be written separately for every application. The concept of an application framework carries the event loop concept further. Instead of dealing with all the nuts and bolts of constructing basic menus, windows, and dialog boxes and then making all these things work together, programmers using application frameworks start with working application code and basic user interface elements in place. Subsequently, they build from there by replacing some of the generic capabilities of the framework with the specific capabilities of the intended application.

Application frameworks reduce the total amount of code that a programmer has to write from scratch. However, because the framework is really a generic application that displays windows; supports copy and paste, and so on, the programmer can also relinquish control to a greater degree than event loop programs permit. The framework code takes care of almost all event handling and flow of control, and the programmer's code is called only when the framework needs it (e.g., to create or manipulate a proprietary data structure).

A programmer writing a framework program not only relinquishes control to the user (as is also true for event loop programs), but also relinquishes the detailed flow of control within the program to the framework. This approach allows the creation of more complex systems that work together in interesting ways, as opposed to isolated programs, having custom code, being created over and over again for similar problems.

Thus, as is explained above, a framework basically is a collection of cooperating classes that make up a reusable design solution for a given problem domain: It typically includes objects that provide default behavior (e.g., for menus and windows), and programmers use it by inheriting some of that default behavior and overriding other behavior so that the framework calls application code at the appropriate times.

There are three main differences between frameworks and class libraries:
- Behavior versus protocol. Class libraries are essentially collections of behaviors that you can call when you want those individual behaviors in your program. A framework, on the other hand, provides not only behavior but also the protocol or set of rules that govern the ways in which behaviors can be combined, including rules for what a programmer is supposed to provide versus what the framework provides.
- Call versus override. With a class library, the code the programmer instantiates objects and calls their member functions. It's possible'to instantiate and call objects in the same way with a framework (i.e., to treat the framework as a class library), but to take full advantage of a framework's reusable design, a programmer typically writes code that overrides and is called by the framework. The framework manages the flow of control among its objects. Writing a program involves dividing responsibilities among the various pieces of software that are called by the framework rather than specifying how the different pieces should work together.
- Implementation versus design. With class libraries, programmers reuse only implementations, whereas with frameworks, they reuse design. A framework embodies the way a family of related programs or pieces of software work. It represents a generic design solution that can be adapted to a variety of specific problems in a given domain. For example, a single framework can embody the way a user interface works, even though two different user interfaces created with the same framework might solve quite different interface problems.

Thus, through the development of frameworks for solutions to various problems and programming tasks, significant reductions in the design and development effort for software can be achieved. A preferred embodiment of the invention utilizes HyperText Markup Language (HTML) to implement documents on the Internet together with a general-purpose secure communication protocol for a transport medium between the client and a company. HTTP or other protocols could be readily substituted for HTML without undue experimentation. Information on these products is available in T. Berners-Lee, D. Connoly, "RFC 1866: Hypertext Markup Language - 2.0" (Nov. 1995); and R. Fielding, H, Frystyk, T. Berners-Lee, J. Gettys and J.C. Mogul, "Hypertext Transfer Protocol - HTTP/1.1: HTTP Working Group Internet Draft" (May 2, 1996). HTML is a simple data format used to create hypertext documents that are portable from one platform to another. HTML documents are SGML documents with generic semantics that are appropriate for representing information from a wide range of domains. HTML has been in use by the World-Wide Web global information initiative since 1990. HTML is an application of ISO Standard 8879; 1986 Information Processing Text and Office Systems; Standard Generalized Markup Language (SGML).

To date, Web development tools have been limited in their ability to create dynamic Web applications which span from client to server and interoperate with existing computing resources. Until recently, HTML has been the dominant technology used in development of Web-based solutions. However, HTML has proven to be inadequate in the following areas:
- Poor performance;
- Restricted user interface capabilities;
- Can only produce static Web pages;
- Lack of interoperability with existing applications and data; and
- Inability to scale.

Sun Microsystem's Java language solves many of the client-side problems by:
- Improving performance on the client side;
- Enabling the creation of dynamic, real-time Web applications; and
- Providing the ability to create a wide variety of user interface components.

With Java, developers can create robust User Interface (UI) components. Custom "widgets" (e.g., real-time stock tickers, animated icons, etc.) can be created, and client-side performance is improved. Unlike HTML, Java supports the notion of client-side validation, offloading appropriate processing onto the client for improved performance. Dynamic, real-time Web pages can be created. Using the above-mentioned custom UI components, dynamic Web pages can also be created.

Sun's Java language has emerged as an industry-recognized language for "programming the Internet." Sun defines Java as "a simple, object-oriented, distributed, interpreted, robust, secure, architecture-neutral, portable, high-performance, multithreaded, dynamic, buzzword-compliant, general-purpose programming language. Java supports programming for the Internet in the form of platform-independent Java applets." Java applets are small, specialized applications that comply with Sun's Java Application Programming Interface (API) allowing developers to add "interactive content" to Web documents (e.g., simple animations, page adornments, basic games, etc.). Applets execute within a Java-compatible browser (e.g., Netscape Navigator) by copying code from the server to client. From a language standpoint, Java's core feature set is based on C++. Sun's Java literature states that Java is basically, "C++ with extensions from Objective C for more dynamic method resolution."

Another technology that provides similar function to JAVA is provided by Microsoft and ActiveX Technologies, to give developers and Web designers wherewithal to build dynamic content for the Internet and personal computers. ActiveX includes tools for developing animation, 3-D virtual reality, video and other multimedia content. The tools use Internet standards, work on multiple platforms, and are being supported by over 100 companies. The group's building blocks are called ActiveX Controls, which are fast components that enable developers to embed parts of software in hypertext markup language (HTML) pages. ActiveX Controls work with a variety of programming languages including Microsoft Visual C++, Borland Delphi, Microsoft Visual Basic programming system and, in the future, Microsoft's development tool for Java, code named "Jakarta." ActiveX Technologies also includes ActiveX Server Framework, allowing developers to create server applications. One of ordinary skill in the art readily recognizes that ActiveX could be substituted for JAVA without undue experimentation to practice the invention.

### Merger and Acquisition Engine System Overview

The Merger and Acquisition (M&A) Engine provides knowledge management and delivery capabilities to facilitate the learning and execution of merger-related work. In one embodiment, this is accomplished by storing the M&A Engine on a centralized server which may be accessed over a network, i.e. the Internet, via a web site using a hardware implementation set forth hereinabove and shown in Figure 1.

During operation, the M&A Engine facilitates user work, manages and delivers reusable knowledge, improves the ability to manage change resulting from mergers and acquisitions, and expedites the learning process for new merger resources. The M&A Engine streamlines communication between merger participants, and assists in the consolidation of projects. The M&A Engine can also be used as a marketing tool. In addition, the M&A Engine promotes standardization of processes that are applicable to individual areas such as status reporting, business case development, and budget and benefits monitoring.

Using the M&A Engine, productivity is improved during the transition by increased communication. Merger/acquisition participants are given a common entry point to effectively access information and deliverables, leverage existing knowledge, contribute knowledge, conduct informal conversations, document meeting outcomes and issues, etc.

The M&A Engine improves documentation and outcomes by providing users access to the entire history of an on-line discussion. This functionality improves the understanding of issues and/or topics, e.g. conversion schedule, DARTs, etc., as well as what decisions or progress has been made towards a resolution. The M&A Engine improves issue resolution during the transition by utilizing discussion databases to submit and/or answer issues, questions, topics, etc. This gives key stakeholders an improved understanding of the most current status of key deliverables.

The M&A Engine's streamlined communication throughout the transition yields benefits such as:
- Improved creativity through more frequent communication with subject matter experts and on-line brainstorming sessions or idea sharing;
- Reduced project completion cycles due to increased communication and collaboration of ideas, e.g. sharing of best practices, discussion databases, etc.;
- Reduced costs due to fewer printed pages to distribute mass communications, e.g. administrative memos, phone directories, newsletters, etc., and key deliverables by providing information on-line; and
- Reduced telephone, video conferencing, and travel costs, as users are able to conduct "virtual meetings" via the M&A Engine discussion databases.

The M&A Engine supports standardization of consolidation activities and deliverables. Users are consistently guided through the steps to complete merger/acquisition activities, and are provided samples and templates to facilitate the completion of deliverables associated with those activities. The M&A Engine also develops and retains institutional knowledge related to consolidation, thus reducing costs related to training and use of outside consultants.

The M&A Engine also supports the evolution of process-driven methods for the transition by utilizing the Intranet as its delivery vehicle. Through the M&A Engine, users are able to "drill-down" from a merger activity to specific task packages and deliverables. This capability improves the understanding throughout the organization of the complete range of activities that are involved with the consolidation of two or more organizations.

One embodiment of the M&A Engine includes a plurality of features for accomplishing the foregoing goals. For example, the present invention includes Navigation Chevron, a Discussion Database, a Discussion Database Interface Page, a 30/60/90 Plan, and a Merger Site Map. The Navigation Chevron is used to navigate the user through the M&A Engine environment. The Discussion Database is used to discuss concepts and serve as an audit trial of topics. The Discussion Database Interface Page describes the various discussion groups available to the user, and subscribes the user to individual discussion groups when selected. The 30/60/90 Plan is used to account for all actions taken during the first 90 days of consolidation. Finally, the Merger Site Map tracks activities and duration of these activities throughout the consolidation.

### Navigation Chevron

The Navigation Chevron of the present invention is a form of hypertext that facilitates the navigation of data during use of the M&A Engine. Hypertext systems are a class of complex information management systems. These systems allow people to create, annotate, link together, and share information from a variety of media such as text, graphics, audio, video, animation, and programs. They also provide flexible access to information by incorporating the notions of navigation, annotation, and tailored presentation.

Hypertext is defined as an approach to information management in which data is stored in a network of nodes connected by links. Nodes can contain text, graphics, audio, video as well as source code or other forms of data. Hypertext with multimedia is called "hypermedia". The utility of hypermedia lies in its ability to produce large, complex, richly connected, and cross-referenced bodies of information.

Outside the academic world, due to the implementation of hypertext-like features in products such as MS Windows Help, information systems professionals are of the opinion that hypertext is just another user interface approach. However, hypertext is a hybrid that spans across traditional boundaries. It is a database method providing a novel way of directly accessing and managing data. It is also a representation scheme, a kind of semantic network, which mixes informal textual material with more formal and mechanized processes. It is an interface modality that features link icons or markers that can be arbitrarily embedded with the contents and can be used for navigational purposes. In short, a hypertext system is a database system which provides a totally different and unique method of accessing information. Whereas traditional databases have some structure around them, a hypertext database has no regular structure. The user is free to explore and assimilate information in different ways.

A hypertext system is made of nodes, or concepts, and links, or relationships. A node usually represents a single concept or idea. It can contain text, graphics, animation, audio, video, images or programs. It can be typed and can include detail, proposition, collection, summary; observation, and issue, thereby carrying semantic information. Nodes are connected to other nodes by links. The node from which a link originates is called the reference and the node at which a link ends is called the referent. They are also referred to as anchors. The contents of a node are displayed by activating links.

Links connect related concepts or nodes. They can be bidirectional thus facilitating backward traversals. Links can also be typed, i.e. specification link, elaboration link, membership link, opposition link and others, specifying the nature of relationship. Links can be either referential for cross-referencing purposes or hierarchical for showing parent-child relationships. Activation of a link marker displays a node.

Hypertext parallels human cognition and facilitates exploration. People think in nonlinear chunks which they try to associate with each other, thus building a network of concepts. When a person reads a book, they go back and forth a number of times to refer to previously read material, to make notes, and to jump to topics using the table of contents or the index. When they set out to write a document, they first develop an outline of ideas. Then, a person brainstorms, writes down on paper, organizes, revises, reorganizes and repeats the cycle until they are satisfied with the outcome-a coherent document. In fact, people have been forced to adapt to traditional, linear text because of representation on paper.

In order to understand hypertext, it is very essential to understand how people read and write documents. Reading and writing models have been developed by cognitive psychologists that can be used to understand non-linear thinking by human beings.

The theory of semiotics or the study of symbols shows that the understanding of knowledge ' takes place at four levels: lexical, syntactic, semantic and pragmatic. At the lexical level, the user determines the definition for each word encountered. At the syntactic level, the subject, action and object of a sentence are determined. The meaning of a sentence is determined at the semantic level. The pragmatic interpretation of text depends on the integration of semantic meaning of text with the reader's knowledge of self and of the world.

While reading text, people proceed from a lexical level to the syntactic level, to the semantic and to the pragmatic levels in that order. All these levels interact continuously and they cannot be truly separated. The reader might have to have knowledge of the world in order to understand the meaning of a word. The correct syntactic and semantic interpretation of text may depend on the reader's knowledge of the world. Hence, though readers may proceed from words to sentences, to paragraphs and to the overall document, the progress is more forward and backward.

A mental representation of the meaning of text is then constructed which is in the form of propositions or relationships. While reading text, readers establish local coherence in short-term memory-small scale inferences from few small units of information, i.e. relationships between words, sentences and so on. The reader makes preliminary hypotheses based on titles, words, propositions, and knowledge about the real world. A reading control system retrieves knowledge from the real world, present in long-term memory, in order to filter out information present in short-term memory. These hypotheses are refined as the reading of the text proceeds, with the reading control system being invoked continuously. These propositions are combined into larger structures, also called global. This hypothesized macroproposition or superstructure is used to understand the overall content of the text. The construction of a coherent mental representation has important consequences for navigation. In addition to generating forward references, we accumulate cues for backward navigation.

The reading control system uses the spreading activation model to access propositions or concepts. In semantic memory, each concept is connected to a number of other concepts. Activating one concept activates its adjacent concepts which in turn activate their adjacent concepts. Thus, activation spreads through the memory structure, determining what is to be added and what is to be removed from the interpretation of text. This process continues until further activation of adjacent propositions does not change the propositions used to interpret the text. That is, spreading activation decreases over time and semantic distance.

Writing is constrained by goal and audience. The author is guided by a goal but constrained by what the audience is prepared to accept. Different people approach writing in different ways. Some are good at making an outline first and then brainstorming. Some do the opposite. An expert author would always keep the reading model in mind so that the writing clearly reaches the target audience.

Writing involves the following three phases: exploring, organizing, and encoding. In the Cognitive Framework for Written Communication, Smith et al. call these three phases prewriting, organizing, and writing.

Exploring or pre-writing is the process of brainstorming and taking unstructured notes. The writer retrieves potential content from long-term memory or external sources, considers possible relations among ideas, groups related ideas and constructs small hierarchical structures. Thus, the product of exploration is a network or directed graph of ideas.

Organizing is the process of putting these notes or ideas in order, in the form of an outline or a hierarchy. This process involves abstract construction that involves perceiving subordinate/superordinate relations, comparing abstractions, sequencing, proportion, and balance. Thus, the product of organization is a hierarchy of related concepts.

Encoding or writing is the final phase of completing the document. The primary task is translating the abstractions of content and the relations of a hierarchical structure into a sequence of words, sentences, paragraphs, sections, chapters, and illustrations. The structure of the encoded text is linear and represents a path through the hierarchy. Reading employs processes in the reverse order. That is, a linear sequence of words is transformed into a hierarchy which is later integrated into a network in long-term memory.

The writing model can be extended by considering unstructured and structured representation at each phase. Whereas an unstructured item is isolated, a structured item shows coherence. Exploring can be split into unstructured brainstorming followed by structured note-taking.

Organizing can be classified as unstructured argumentation where relationships are established between ideas and structured organization of notes where notes are grouped together to make coherent sense. Encoding has an unstructured phase of linear planning which involves viewing groups of notes as sequences and a structured phase of drafting and revising in order to produce a final document which is a linear sequence of notes.

Just as the reader of a linear document constructs a local and global mental representation of the document, the author of a linear document uses cues both at the local and at the global levels, dividing the document into chapters, sections, paragraphs, sentences, words etc. This facilitates comprehension and navigation.

Thus, both reading and writing processes emphasize a lot on the non-linear nature of thinking, a natural process in human beings. Human cognition is essentially organized as a semantic network in which concepts are linked together by associations. Hypertext systems try to exploit this basic nature of cognition.

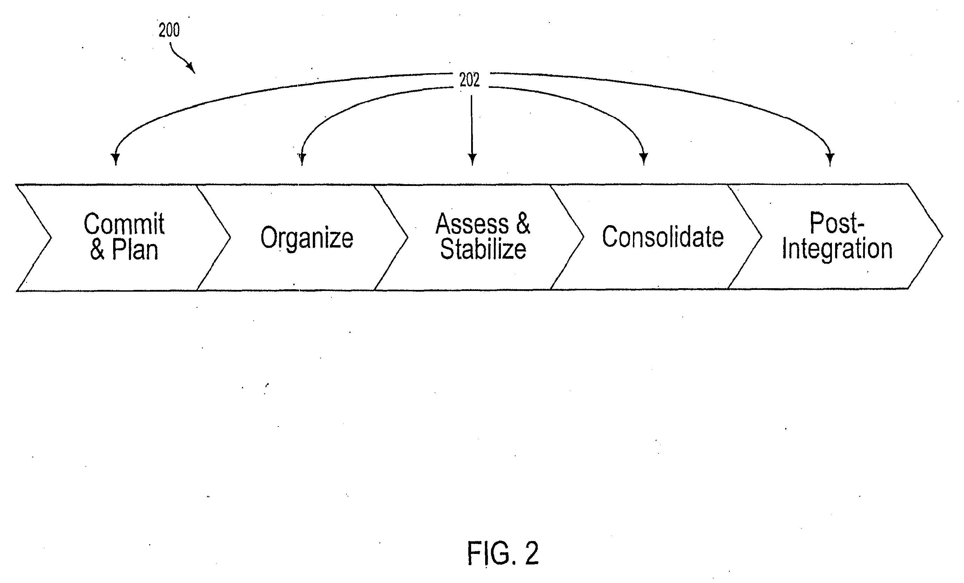

One aspect of the present invention utilizes a unique hypertext feature, a Navigation Chevron **200**, to navigate the user through the data in the M&A engine environment. Figure **2** is an illustration of the Navigation Chevron **200**. The Navigation Chevron **200** is generally shaped as an indicia similar to a pointer, and may be arranged in any orientation, such as horizontally, diagonally, or vertically.

The Navigation Chevron **200** is made up of components, or discrete phase chevrons **202**, which are generally shaped similar to the Navigation Chevron **200**. Displayed on each discrete phase chevron **202** is an indication of the topic relating to that particular discrete phase chevron **202**. The indication may be a color, or some other identifying mark. A preferred indication is the title or general description of the topic area related to the particular discrete phase chevron **202**. The description allows the user to easily determine which discrete phase chevron **202** relates to the particular topic needed to complete a particular task.

The Navigation Chevron **200** is used to navigate a database of knowledge utilizing a progression of ideas or phases. Each idea or phase of the knowledge database is represented by a discrete phase chevron **202** in the Navigation Chevron **200**. The discrete phase chevrons **202** are organized in a logical progression of the topics covered by the Navigation Chevron's **200** related knowledge database.

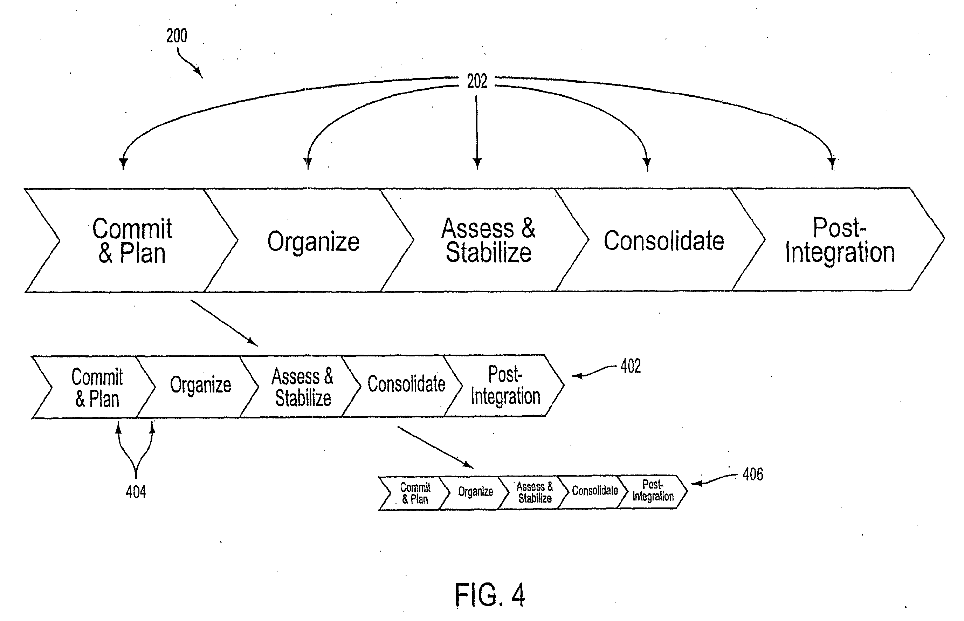

The topic pages in the related knowledge database generally include a Navigation Chevron **200** as part of their display. The Navigation Chevron **200** may be located anywhere on the display, preferably away from the data provided by the knowledge database, such as at the top or to the side of the display. In addition, the Navigation Chevron 200 may be of any size. A preferred embodiment uses an initially large Navigation Chevron **200**. However, with each subsequent progression, the Navigation Chevron **200** becomes smaller in size. Note Figure **4****.**

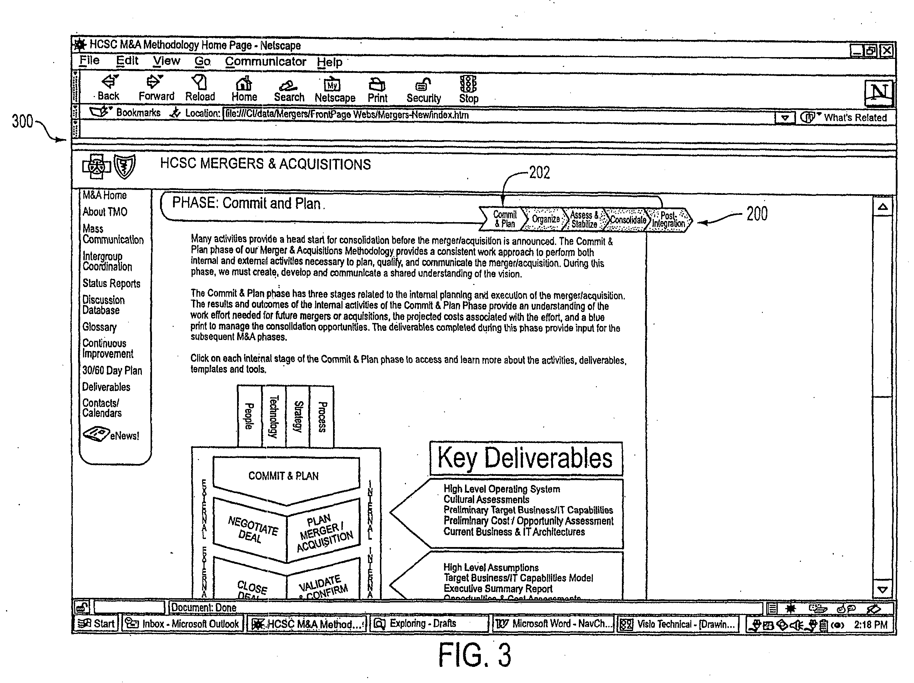

Figure **3** is an illustration of a knowledge database topic page **300**. The knowledge database topic page **300** includes a Navigation Chevron **200** having discrete phase chevrons **202.** The discrete phase chevron **202** that is related to the current knowledge database topic page **300** is highlighted.

As the user decides on an area of knowledge to explore, the user picks a discrete phase chevron **202** utilizing a computer input device, such as the mouse **126**. Once a discrete phase chevron 202 is chosen, the related knowledge database topic page **300** is displayed along with a Navigation Chevron **200** including a highlighted discrete phase chevron **202** related to the current knowledge database topic page **300**. The Navigation Chevron **200** thus allows the user to navigate an extensive knowledge database in an easy and intuitive manner.

The user is able to explore the knowledge database in the order presented on the Navigation Chevron **200**, or in an order more pertinent to the task at hand. By selecting the topic to explore in the Navigation Chevron **200** the user can go directly to the topic needed for a particular task. In addition, the Navigation Chevron **200** allows the user to visualize the knowledge database as a whole, and determine how the current knowledge database topic page **300** relates to other topics in the knowledge database. As such, the Navigation Chevron **200** indicates a relationship, i.e. progression or sequence, that is inherently not present in conventional hypertext systems.

Navigation Chevrons **200** may be nested, allowing a more detailed navigation through a knowledge database. Figure 4 is an illustration showing the use of nested Navigation Chevrons **200, 402**, and **406**. In this embodiment, a large Navigation Chevron **200** is used to allow access to broad topic areas covered by discrete phase chevrons **202**. Each topic covered by a discrete phase chevron **202** has a further Navigation Chevron **402** related to the particular broad topic covered by the discrete phase chevron **202.** The Navigation Chevron **402** includes further discrete phase chevrons **404** which relate to more detailed information associated with the broad topic of the discrete phase chevron **202.** The nesting of Navigation Chevrons **200** may continue, including further nested Navigation Chevrons **406**, as much as needed to allow easier navigation of a large knowledge databases. As discussed above, the nested Navigation Chevrons **200** allow the user to visualize the knowledge database as a whole, and determine how a knowledge database topic page **300** relates to the knowledge database as a whole.

It should be noted that Navigation Chevrons **200** may be employed to navigate data within any type of database including, but not limited to the M&A Engine. Below is an html code segment for displaying and using a Navigation Chevron **200**:

```
 <tr align="left" valign="top">
  <td><b><img ismap usemap="#ChevronMap4" border="0" height="54" src="'images/MainChevron.gif"
  width="456"></b></td>
 </tr>
 <map name="ChevronMap4">
       <area shape="poly" coords="347,0,435,1,454,25,435,53,347,53,365,28,345,0" href="Post-
        integration.htm">
       <area shape="poly" coords="258,0,343,0,361,27,345,53,256,52,271,23,259,0"
        href="Consolid.htm">
       <area shape="poly" coords="171,0,255,0,271,25,253,52,173,52,188,26,173,2"
        href="AssessAndStabiliz.htm">
       <area shape="poly" coords="91,0,168,0,186,26,173,49,89,52,105,27,89,2"
        href="Organize.htm">
       <area shape="poly" coords="1,0,88,0,101,23,88,51,5,51,17,27,3,0"
        href="MergerEng_Main.htm">
 </map> <map name="MapFeed">
       <area shape="rect" coords="2,0,173,120" href="feedback.htm">
 </map>
```

### Discussion Database

Bulletin board systems, or BBS's, refer to computer systems equipped with one or more modems or other means of network access that serves as an information and message-passing center for remote users. Often BBS's are focused on special interests, such as science fiction, movies, Windows software, or Macintosh systems, and can have free or fee-based access, or a combination. Users dial into a BBS with their modems and post messages to other BBS users in special areas devoted to a particular topic, in a manner reminiscent to posting notes on a cork bulletin board. Many BBS's also allow users to chat online with other users, send e-mail, download and upload files that include freeware and shareware software, and access the Internet. Many software and hardware companies run proprietary BBS's for customers that includes sales information, technical support, and software upgrades and patches.

In other words, a BBS acts as a storage facility, where people calling from their computers can post or receive messages and send or receive program files. A BBS is usually subdivided by topics so that users with similar interests can send information to other users of similar interests. These related groups of messages are referred to as topics, message areas, forum(s), or conferences, i.e. a particular BBS may contain numerous related groups of messages such as on the subjects of travel, sports, stamp collecting, etc.

BBS's are distinguishable from electronic mail in that BBS's are used for posting messages of a particular group of computer users who have similar interests, but these posted messages are not ordinarily addressed to any particular user. BBS's are also used by some computer users who wish just to read posted messages and other information, without having to post a reply message. For example, a person in Columbus, Ohio, who is preparing for a vacation, may access a BBS on travel through his home computer and post a message asking for the best places to go skiing in the United States. Other network users with an interest in travel may read the message from the person from Columbus, and then reply with their opinion about where the best place is for skiing. There are thousands of BBS's available to computer network users on a wide variety of subject areas.

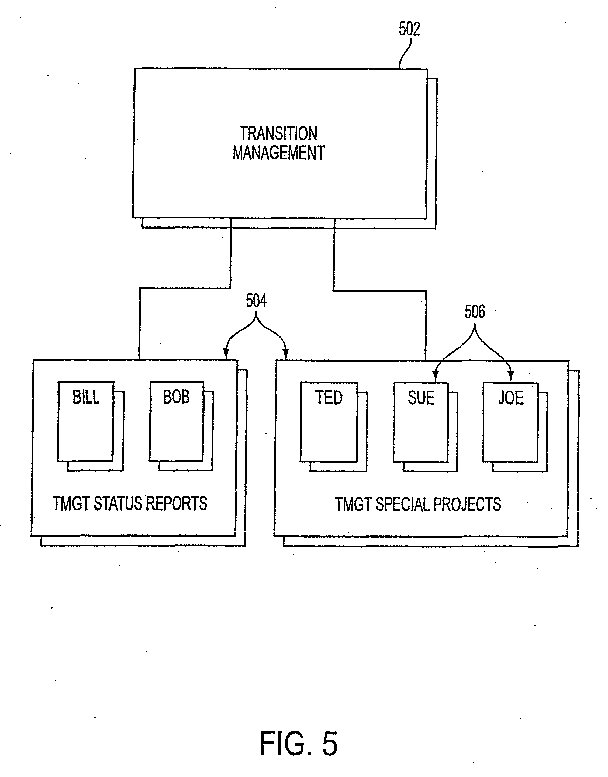

Another component of the M&A Engine of the present invention is the Discussion Database. The Discussion Database, in some limited respects, is similar to a BBS in that it is a repository of knowledge on various topics compiled from the input of various users of the Discussion Database. Figure **5** is a block diagram of a Discussion Database **500** in accordance with one embodiment of the present invention.

A Discussion Database **500** includes a broad topic field **502** having Discussion Groups **504** relating to specific subject areas of the broad topic **502**. The Discussion Groups **504** include User Posts **506** which are documents contributed by users of the Discussion Database **500**. Preferably, the User Posts **506** are contributed by users of the particular broad topic field **502**, and most preferably, the User Posts **506** are contributed by users of the particular discussion group in which the User Post **506** is located. Generally, many broad topic fields **502** are used to create the Discussion Database **500** to increase ease of navigation. Typically, the more broad topic fields 502 that are used to create the Discussion Database **500**, the easier it is for a user to find the particular Discussion Group **502** related to the information they need. However, a broad topic field **502** may itself be a Discussion Group **504**, and thus contain User Posts **506**.

Utilizing the broad topic fields **502**, users locate an area of knowledge they need. As discussed above, within each broad topic field **502** are related Discussion Groups **504**. The Discussion Groups **504** are further refinements of the broad topic field **502** to which they relate. Users search through a list of Discussion Groups **504** within the broad topic field **502** to determine which Discussion Group **504** most closely relates to the information they need. Once a Discussion Group **504** is found relating to the information needed, the user searches through a list of User Posts **506** located in the chosen Discussion Group **504**.

In addition to obtaining information from the User Posts **506** previously located in the Discussion Group **504**, users may contribute their own documents to the Discussion Group **504**, thereby increasing the knowledge base available in the Discussion Database **500**. To contribute documents, users select the document they want to contribute and inform the system utilizing the Discussion Database Interface Page, discussed below. The system then adds the document to the list of available documents contained in the Discussion Group **504** and makes the corresponding document available to other users of the Discussion Database **500.**

The Discussion Database **500** is a dynamic continuously growing entity. The more the Discussion Database **500** is used, the more it grows. The Discussion Database **500** as a whole increases as users continue to contribute documents relating to the various Discussion Groups **504**. For example, in Figure 5, Joe decides he needs information about transition management projects on mergers of Nuclear Reactor companies. Joe first searches a list of broad topic fields **502** and determines that the Transition Management topic is the best topic to search in more detail. He then searches through a list of Discussion Groups **504** associated with the Transition Management topic field **502**, and determines that TMGT Special Projects Discussion Group **504** is the most closely related to the information he needs. Joe then reads through the User Post **506** contained in the TMGT Special Projects Discussion Group **504** and finds the information he needs. Joe then decides to contribute a document he wrote concerning other TMGT Special Projects, and proceeds to post it to the system. In the end, a user acquired the knowledge he needed, and as a result, the Discussion Database **500** increased its available knowledge base. Thus, it can be seen that the use of a continuously growing knowledge database dramatically increases productivity and organizational knowledge without having to continuously rely on outside sources.

### Discussion Database Interface Page

The Discussion Database Interface Page describes the various Discussion Groups which are available to the user of the M&A Engine of the present invention. The Discussion Database Interface Page also subscribes the user to the individual Discussion Groups **504** used most often by the user.

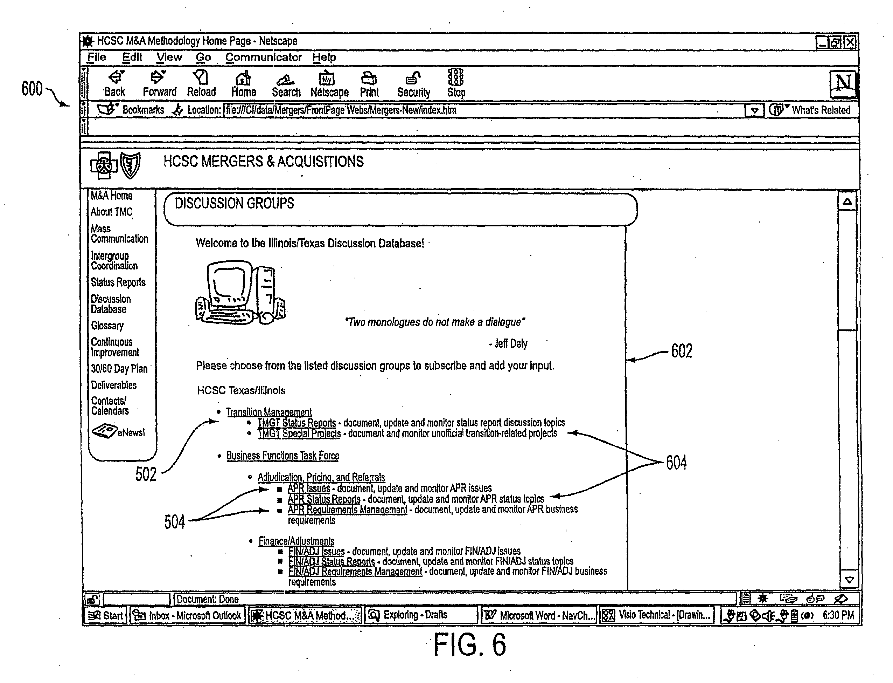

Figure 6 is an illustration of a Discussion Database Interface Page **600.** The Discussion Database Interface Page **600** includes a Discussion Group List **602** having a list of broad topic fields **502** and Discussion Groups **504**. As discussed above, a broad topic field **502** may itself be a Discussion Group **504**.

Each Discussion Group **504** has a Description **604** associated with it. Each Description **604** includes a string of descriptive data, or summary, of what type of information is contained in the related Discussion Group **504**. The Description **604** is preferably kept short to decrease the overall size of the Discussion Group List **602**. However, the Description **604** may be as long as needed to adequately inform users as to the contents of a particular Discussion Group 504.

By describing the categories of information within the Discussion Groups **504**, a user may effectively select the categories on the Discussion Database Interface Page **600** which are most relevant. As an option, the aforementioned string of descriptive data may constitute a link to the data. Also, a user may subscribe and access the categories of data by executing only one user action, namely clicking on the appropriate Discussion Groups **504** on the Discussion Database Interface Page **600**.

As such, the Discussion Database Interface Page **600** is utilized by the user to subscribe to and access individual Discussion Groups **504**. When a user wishes to join a Discussion Group **504,** the user selects the appropriate Discussion Group **504** from the Discussion Group List **602**. The corresponding Discussion Group **504** is then added to the Discussion Groups **504** the user can utilize. By subscribing only to Discussion Groups **504** pertinent to the particular user's interest and needs, the user can more quickly obtain needed information. Since the number of Discussion Groups **504** subscribed to by a particular user is generally much less than the total number of Discussion Groups **504** available, the user does not need to search through a large list of Discussion Groups **504** every time he or she needs information. Instead, the user selects only those Discussion Groups **504** that he or she will need most often. Thereafter, when the user desires information, he or she will generally only need to search through the Discussion Groups **504** the user has subscribed to. Thus, the search time is drastically reduced after the first use of the system.

The use of the Discussion Database **500** in combination with the Discussion Database Interface Page **600** creates a wealth of information useful for the entire organization utilizing the system. The Discussion Database **500** contains not only information provided by the organization that sets up the Discussion Database **500**, but also information provided by users of the system. The Discussion Database coupled with the Discussion Database Interface Page **600** creates a "living library" which grows with each use, and grows with the knowledge of its users. As users acquire more knowledge from experience and other outside sources, they transfer that knowledge to the Discussion Database 500 utilizing the Discussion Database Interface Page **600**. The transfer of knowledge to the Discussion Database **500** increases the knowledge contained in the Discussion Database 500, and helps keep the information contained in the Discussion Database **500** updated as new developments arise in various fields.

It should be noted that the Discussion Database Interface Page **600** may be employed to provide effective access to any type of database including, but not limited to, the database associated with the M&A Engine. Below is a code segment for creating a Discussion Database Interface Page **600**:

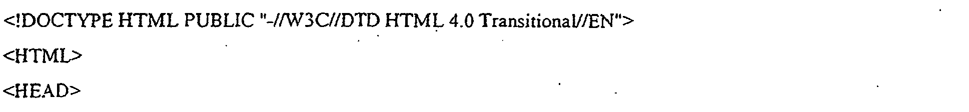

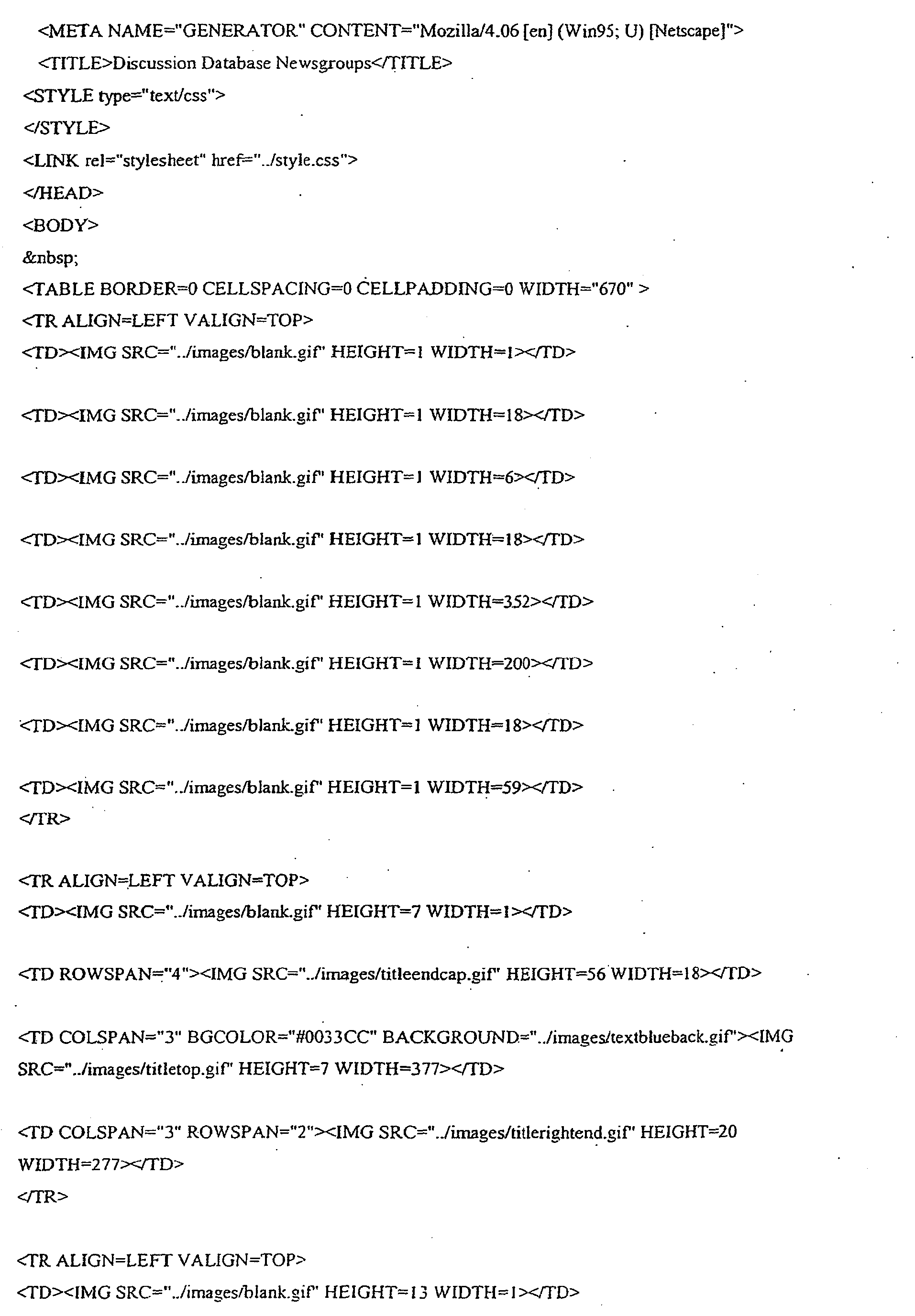

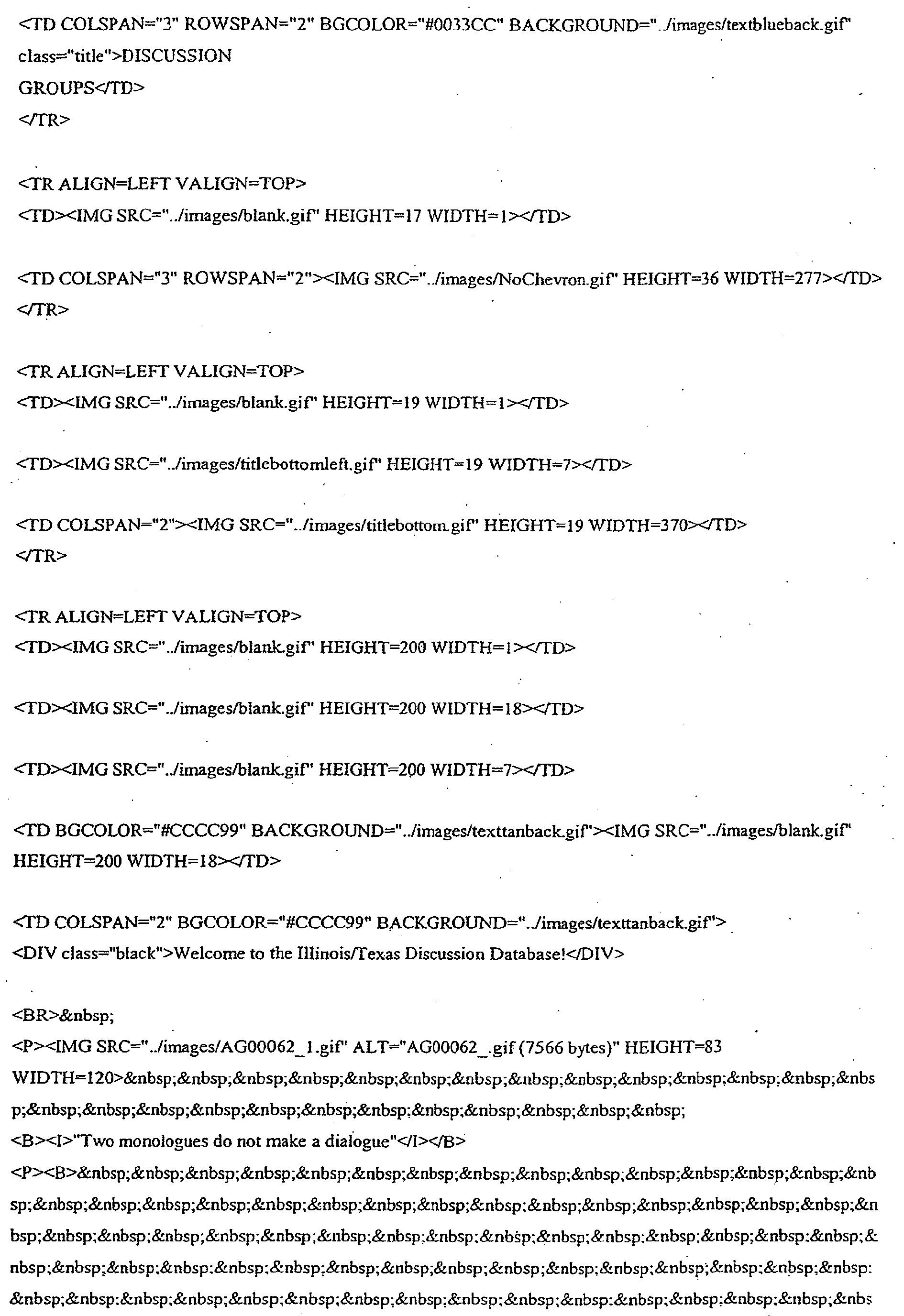

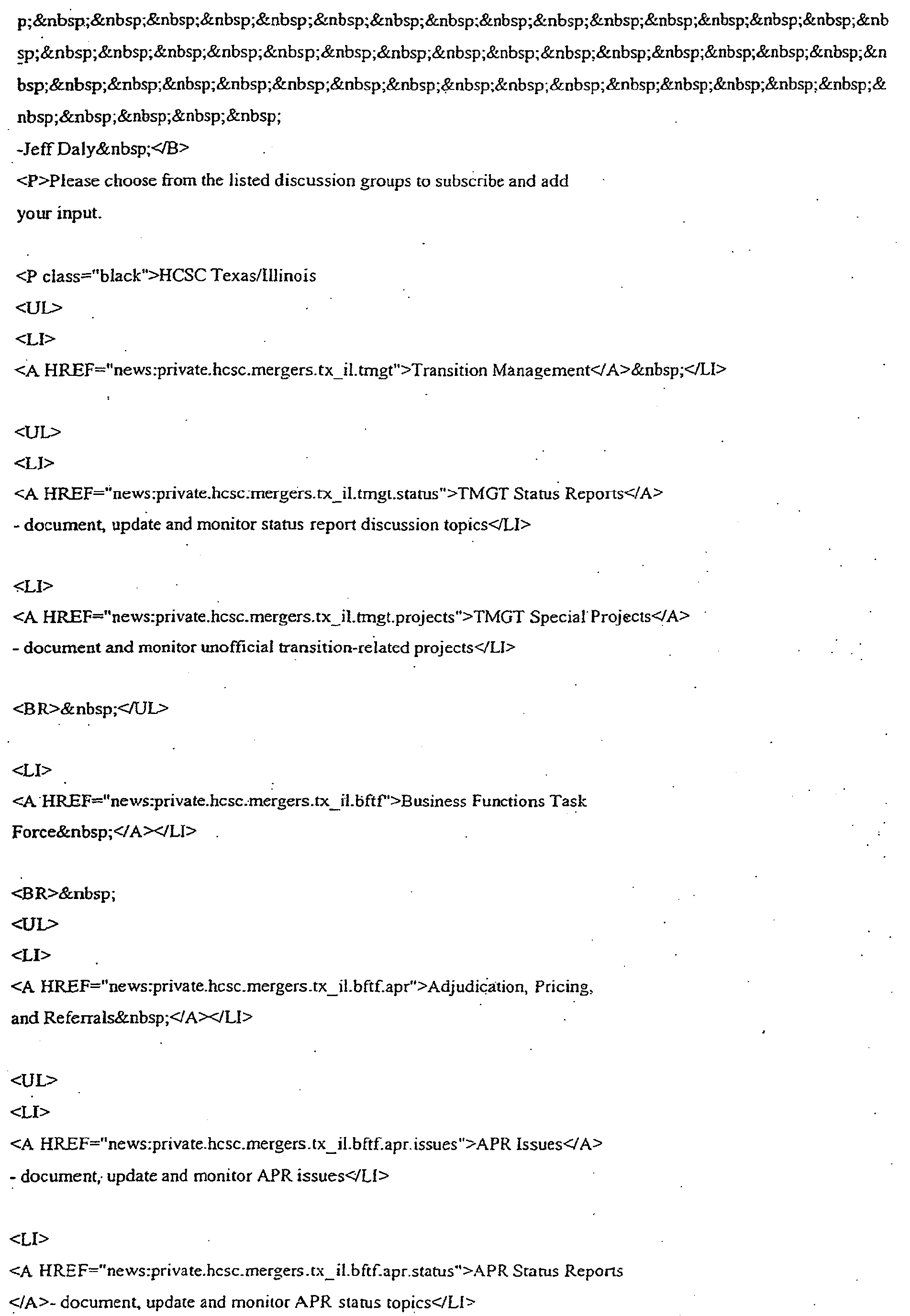

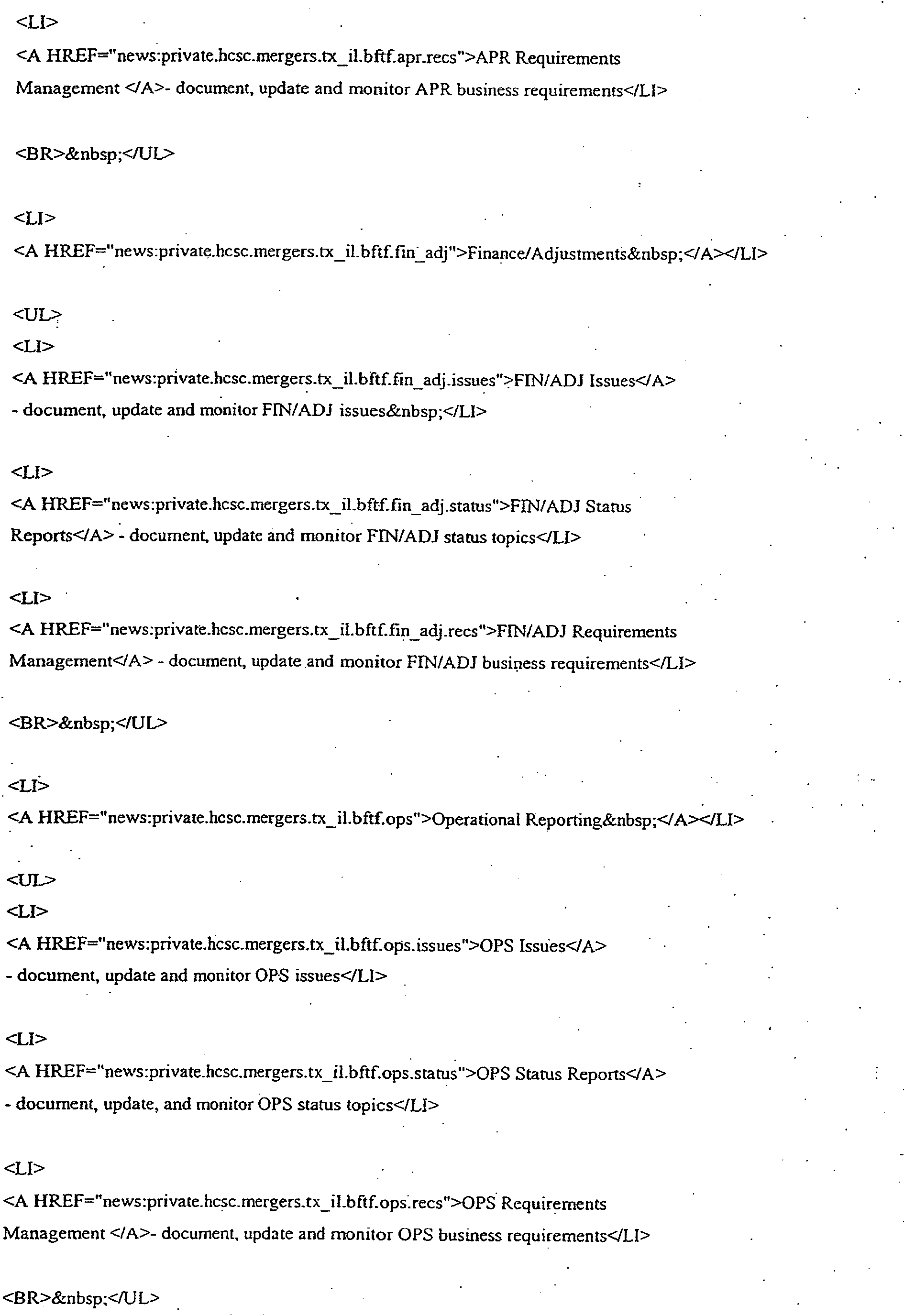

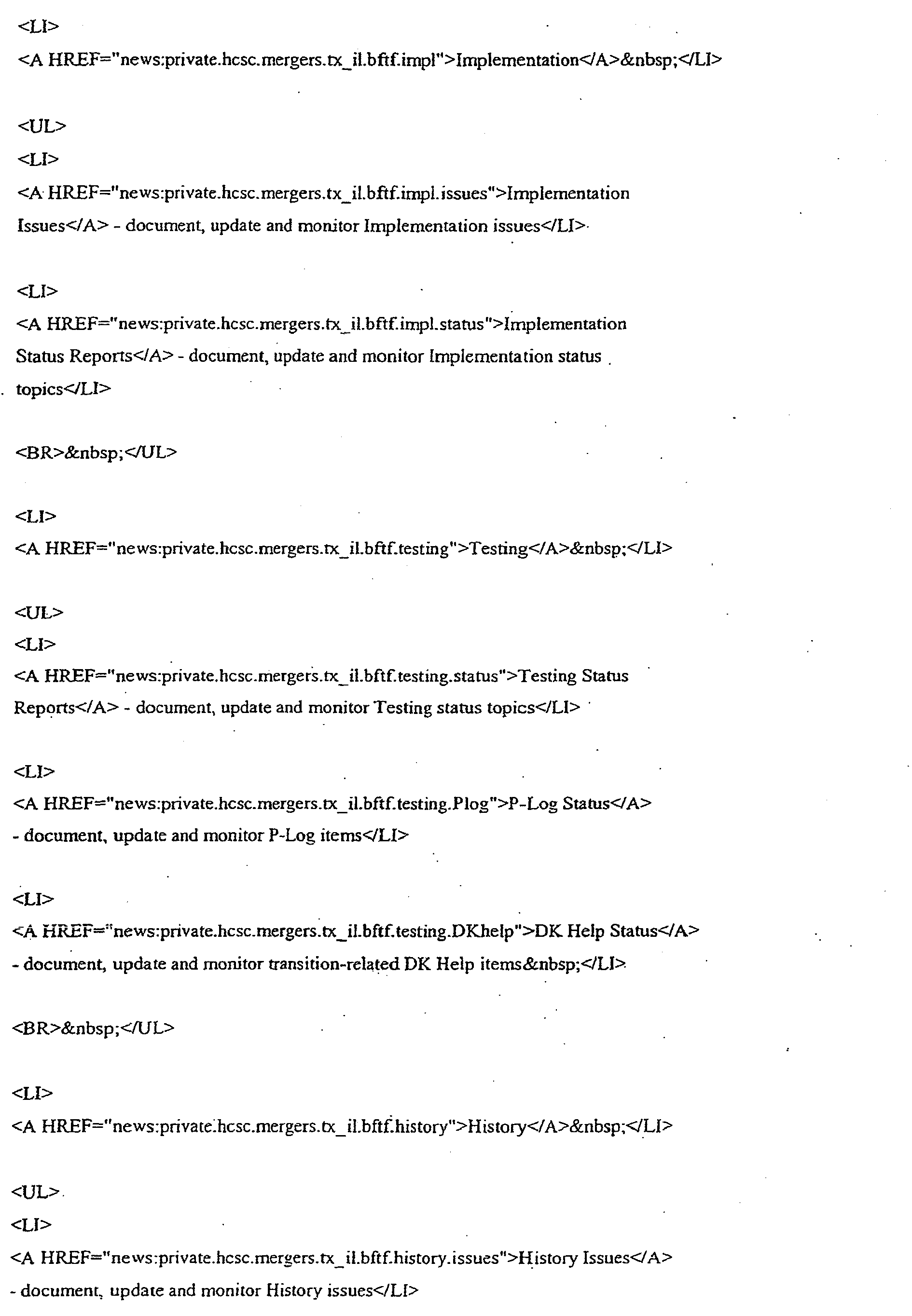

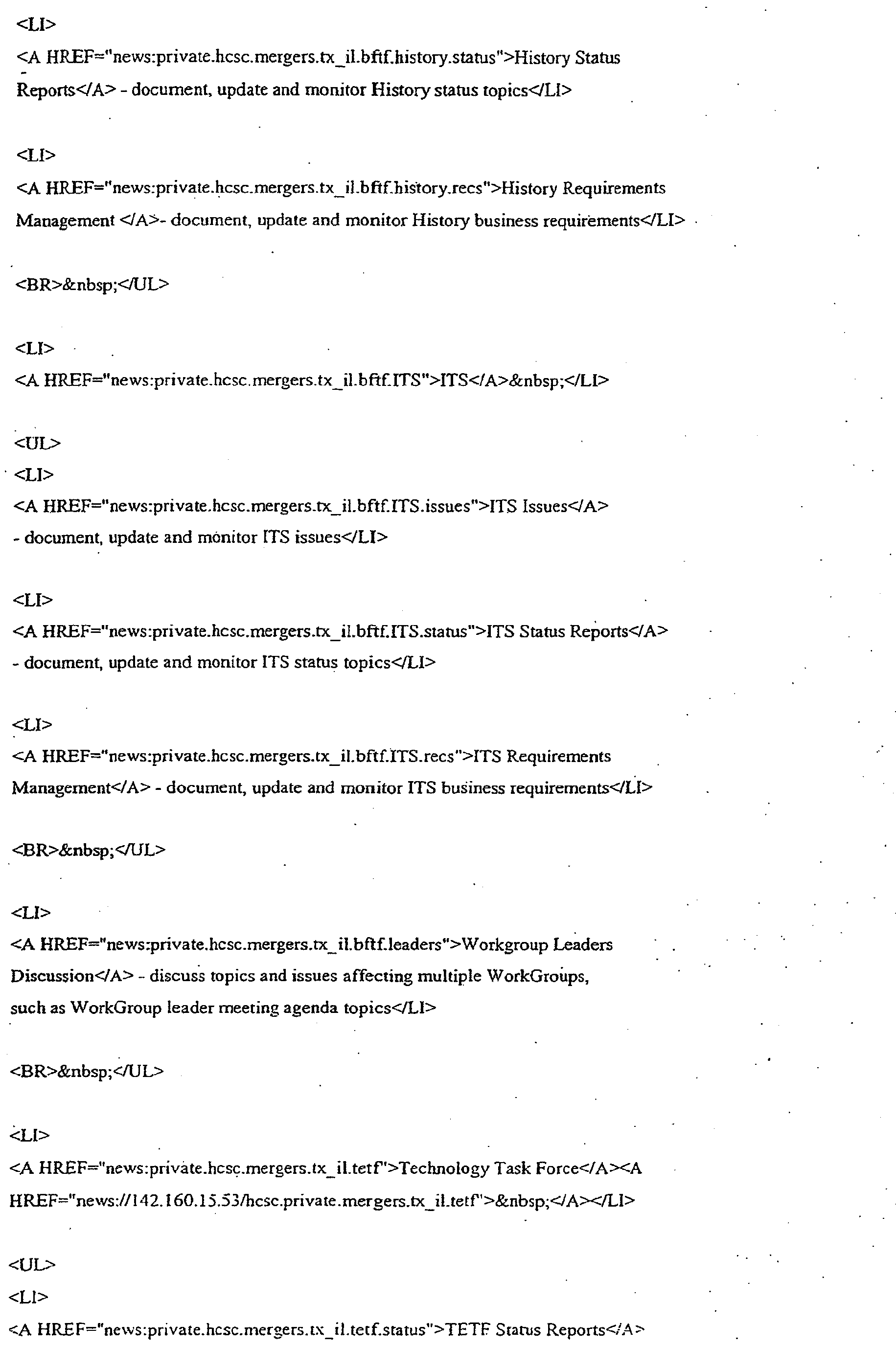

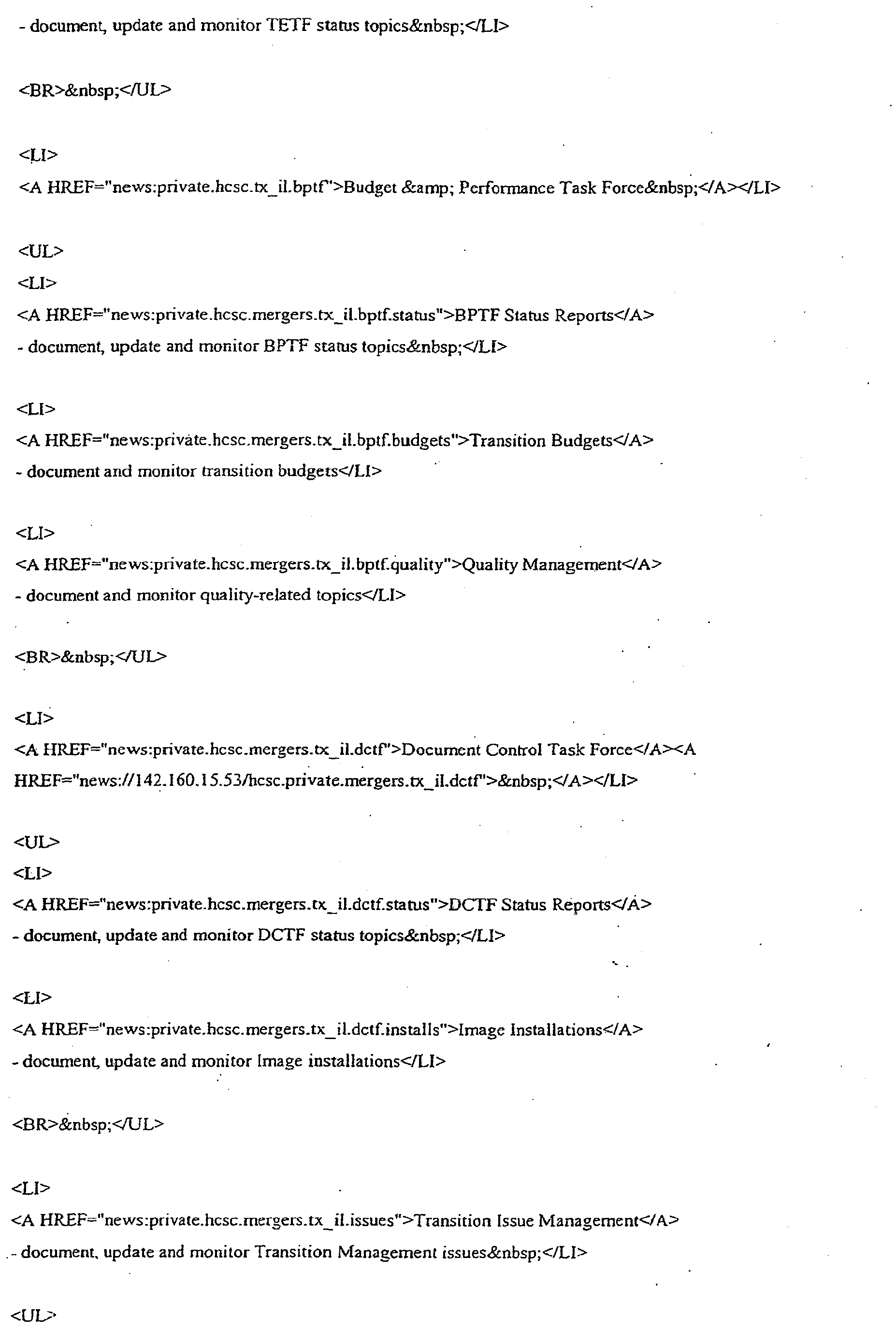

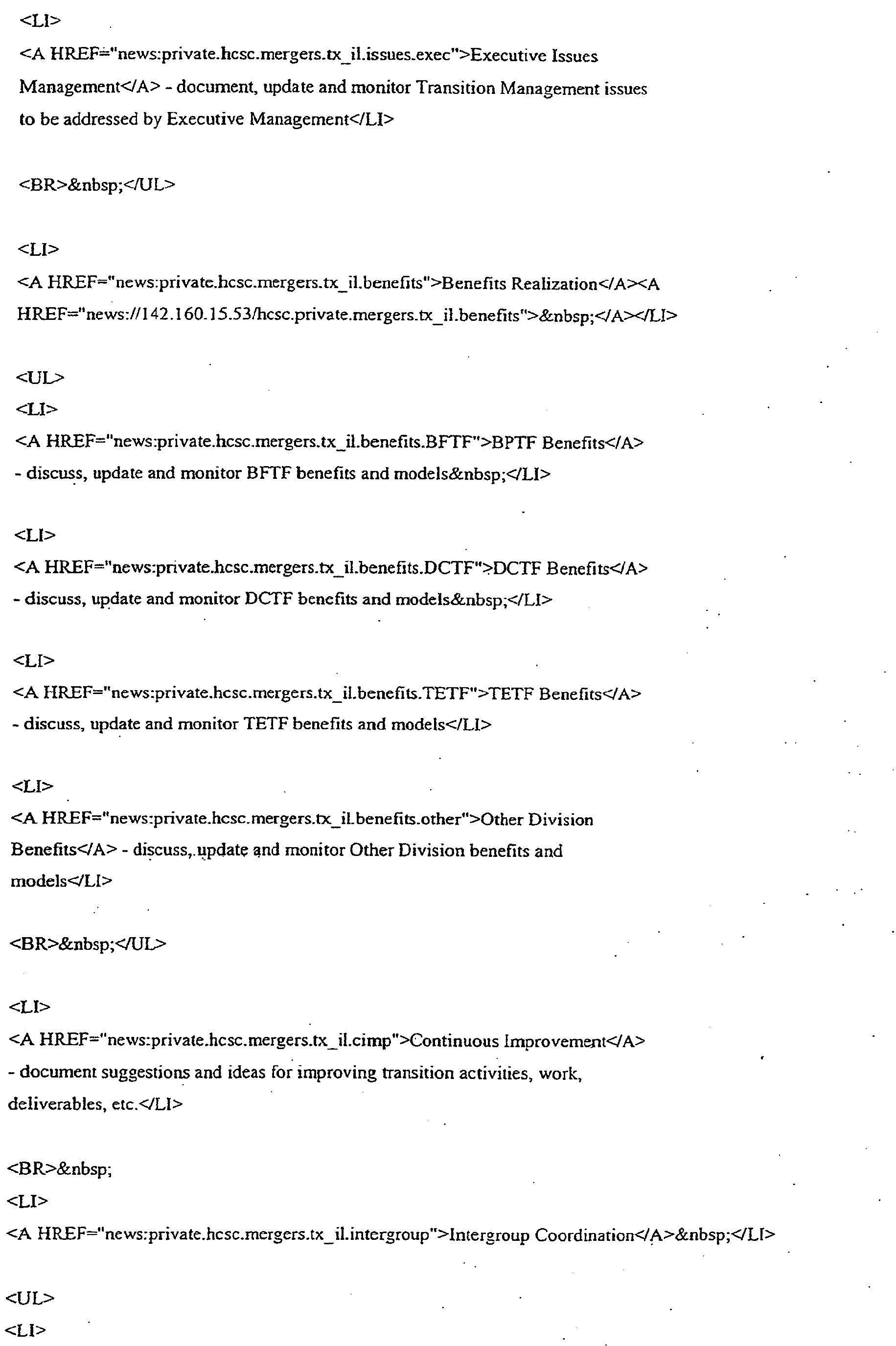

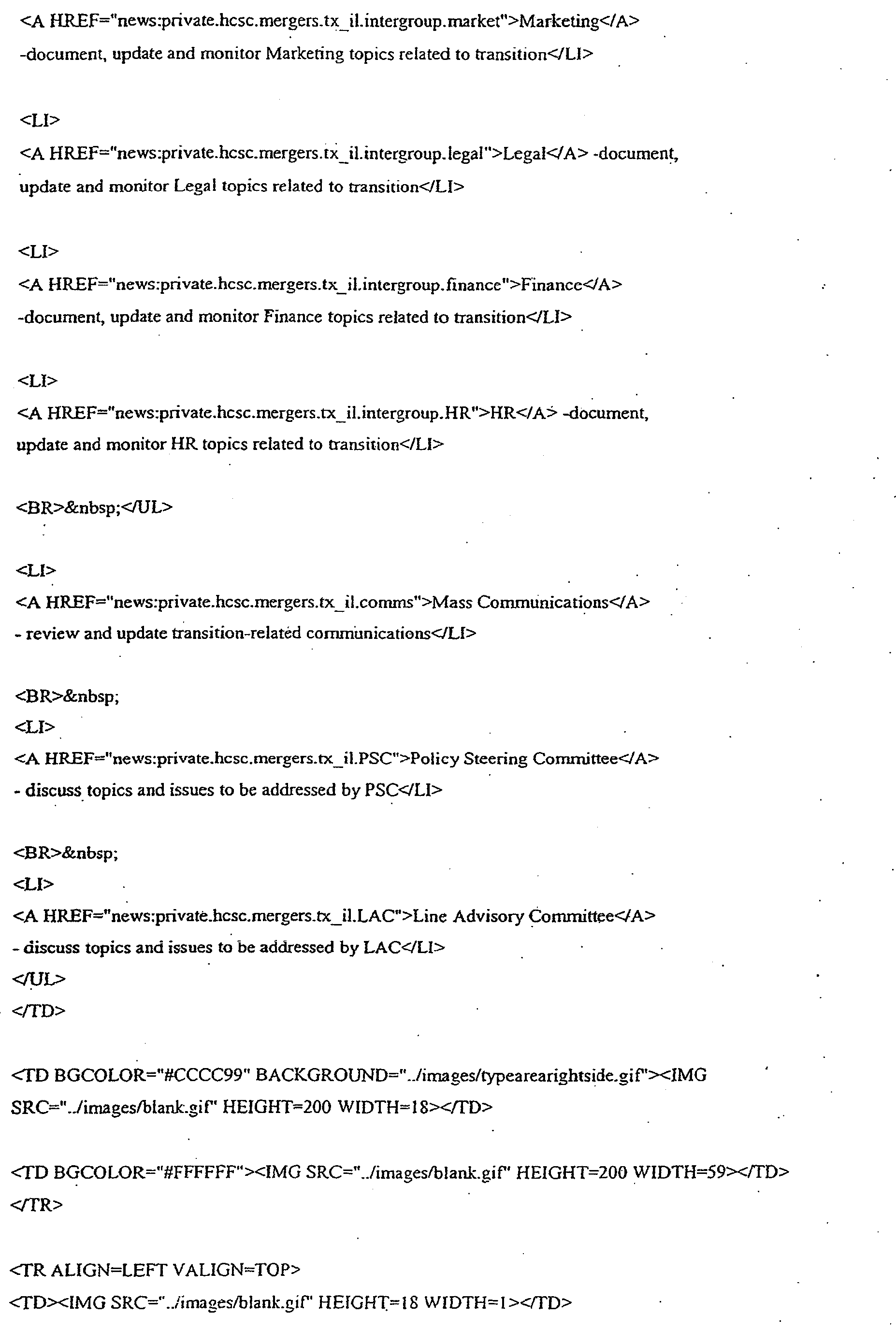

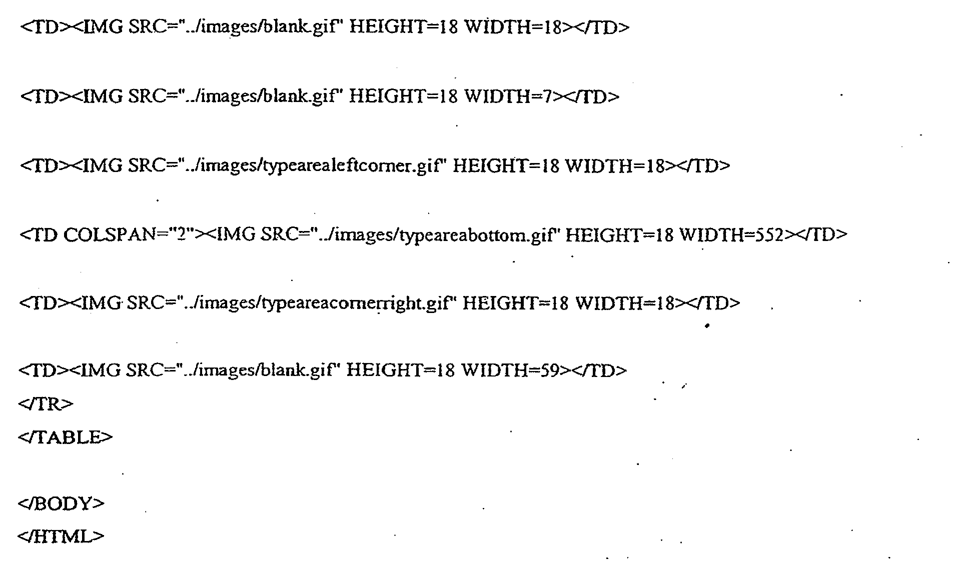

Although only a few embodiments of the present invention have been described in detail herein, it should be understood that the present invention may be embodied in many other specific forms without departing from the spirit or scope of the invention. Therefore, the present examples and embodiments are to be considered as illustrative and not restrictive, and the invention is not to be limited to the details given herein, but may be modified within the scope of the appended claims,

This application is a divisional application of European patent application no. 08 153 773.0 (the "parent application"), also published under no. EP 1 939 769, which in turn is a divisional application of European patent application no.: 00 986 233.5, also published under no. EP 1 275 060. The original claims of this application, also repeated in the parent application, are repeated below in the present specification and form part of the content of this divisional application as filed.
1. A method for facilitating the navigation of data comprising the steps of:
   (a) providing a plurality of links each corresponding to data;
   (b) retrieving the data upon selection of the corresponding link; and
   (c) displaying the links each as a component of an indicia to imply a relationship between the data.
2. The method as set forth in claim 1, wherein the relationship is a progressional relationship.
3. The method as set forth in claim 1, wherein the relationship is a sequential relationship.
4. The method as set forth in claim 1, wherein the indicia implies a direction.
5. The method as set forth in claim 4, wherein the indicia is a pointer.
6. The method as set forth in claim 5, wherein the indicia is a chevron.
7. The method as set forth in claim 1, wherein a currently selected link is visually differentiated with respect to the remaining links.
8. The method as set forth in claim 1, wherein each component has a shape substantially similar to that of the indicia.
9. The method as set forth in claim 1, wherein the links are continuously displayed with the data to continuously imply the relationship.
10. A system for facilitating the navigation of data comprising:
   (a) memory for storing a plurality of data pages;
   (b) a display for depicting a plurality of links each corresponding to one of the data pages, the links each displayed as a component of an indicia to imply a relationship between the data pages; and
   (c) an input.device for retrieving the data pages upon selection of the corresponding link.
11. The system as set forth in claim 10, wherein the relationship is a progressional relationship.
12. The system as set forth in claim 10, wherein the relationship is a sequential relationship.
13. The system as set forth in claim 10, wherein the indicia implies a direction.
14. The system as set forth in claim 13, wherein the indicia is a pointer.
15. The system as set forth in claim 14, wherein the indicia is a chevron.
16. The system as set forth in claim 10, wherein a currently selected link is visually differentiated with respect to the remaining links.
17. The system as set forth in claim 10, wherein each component has a shape substantially similar to that of the indicia.
18. The system as set forth in claim 10, wherein the links are continuously displayed with the data pages to continuously imply the relationship.
19. A computer program embodied on a computer-readable medium for facilitating the navigation of data comprising:
   (a) a code segment that provides a plurality of links each corresponding to data;
   (b) a code segment that retrieves the data upon selection of the corresponding link; and
   (c) a code segment that displays the links each as a component of an indicia to imply a relationship between the data.
20. The computer program as set forth in claim 19, wherein the relationship is a progressional relationship.
21. A method for providing effective access to data comprising the steps of:
   (a) receiving data from multiple users in a plurality of categories;
   (b) providing access to the data via an interface that lists the categories;
   (c) subscribing to the categories of data upon the selection thereof; and
   (d) describing the categories on the interface.
22. The method as set forth in claim 21, wherein the data includes information related to merger and acquisition.
23. The method as set forth in claim 21, wherein the categories are listed in a hierarchy.
24. The method as set forth in claim 23, wherein the categories include a plurality of broad topics and a plurality of specific topics wherein each specific topic is encompassed by at least one of the broad topics.
25. The method as set forth in claim 21, wherein the categories are described by an accompanying string of descriptive data.
26. The method as set forth in claim 21, wherein the categories are described by a string of descriptive data that constitutes a link to the data.
27. The method as set forth in claim 21, further comprising the step of subscribing to and accessing the categories of data in response to a single user action.
28. A system for providing effective access to data comprising:
   (a) memory for storing data from multiple users in a plurality of categories;
   (b) a display for depicting an interface with a list of the categories thereon, the categories being described on the interface; and
   (c) a user input device for subscribing to the categories of data upon the selection thereof.
29. The system as set forth in claim 28, wherein the data includes information related to merger and acquisition.
30. The system as set forth in claim 28, wherein the categories are listed in a hierarchy.
31. The system as set forth in claim 30, wherein the categories include a plurality of broad topics and a plurality of specific topics wherein each specific topic is encompassed by at least one of the broad topics.
32. The system as set forth in claim 28, wherein the categories are described by an accompanying string of descriptive data.
33. The system as set forth in claim 28, wherein the categories are described by a string of descriptive data that constitutes a link to the data.
34. The system as set forth in claim 28, wherein the system is adapted for subscribing to and accessing the categories of data in response to a single user action.
35. A computer program embodied on a computer-readable medium for providing effective access to data comprising:
   (a) a code segment that receives data from multiple users in a plurality of categories;
   (b) a code segment that provides access to the data via an interface that lists the categories;
   (c) a code segment that subscribes to the categories of data upon the selection thereof; and
   (d) a code segment that displays a description of the categories on the interface.
36. The computer program as set forth in claim 35, wherein the data includes information related to merger and acquisition.
37. The computer program as set forth in claim 35, wherein the categories are listed in a hierarchy.
38. The computer program as set forth in claim 37, wherein the categories include a plurality of broad topics and a plurality of specific topics wherein each specific topic is encompassed by at least one of the broad topics.
39. The computer program as set forth in claim 35, wherein the categories are described by an accompanying string of descriptive data.
40. The computer program as set forth in claim 35, wherein the categories are described by a string of descriptive data that constitutes a link to the data.
41. A method for effectively collecting and disseminating information comprising the steps of:
   (a) receiving data from multiple users in a plurality of categories;
   (b) providing access to the data via an interface that lists the categories; and
   (c) subscribing and accessing the categories of data in response to one user action.
42. The method as set forth in claim 41, wherein the data includes information related to merger and acquisition.
43. The method as set forth in claim 41, wherein the categories are listed in hierarchy.
44. The method as set forth in claim 43, wherein the categories include a plurality of broad topics and a plurality of specific topics each encompassed by at least one of the broad topics.
45. The method as set forth in claim 41, further comprising the step of describing the categories on the interface.
46. The method as set forth in claim 45, wherein the categories are described by an accompanying string of descriptive data.
47. The method as set forth in claim 45, wherein the categories are described by a string of descriptive data that constitutes a link to the data.
48. A system for effectively collecting and disseminating information comprising:
   (a) memory for storing data from multiple users in a plurality of categories;
   (b) a display for depicting an interface with a list of categories of data thereon; and
   (c) a user input device for subscribing to the categories and accessing the categories in response to one user action.
49. The system as set forth in claim 48, wherein the data includes information related to merger and acquisition.
50. The system as set forth in claim 48, wherein the categories are listed in hierarchy.
51. The system as set forth in claim 50, wherein the categories include a plurality of broad topics and a plurality of specific topics each encompassed by at least one of the broad topics.
52. The system as set forth in claim 48, further comprising a description of the categories on the interface.
53. The system as set forth in claim 52, wherein the categories are described by an accompanying string of descriptive data.
54. The system as set forth in claim 52, wherein the categories are described by a string of descriptive data that constitutes a link to the data.
55. A computer program embodied on a computer-readable medium for effectively collecting and disseminating information comprising:
   (a) a code segment that receives data from multiple users in a plurality of categories;
   (b) a code segment that provides access to the data via an interface that lists the categories; and
   (c) a code segment that subscribes and accesses the categories of data in response to one user action.
56. The computer program as set forth in claim 55, wherein the data includes information related to merger and acquisition.
57. The computer program as set forth in claim 55, wherein the categories are listed in hierarchy.
58. The computer program as set forth in claim 57, wherein the categories include a plurality of broad topics and a plurality of specific topics each encompassed by at least one of the broad topics.
59. The computer program as set forth in claim 55, further comprising a description of the categories on the interface.
60. The computer program as set forth in claim 59, wherein the categories are described by - an accompanying string of descriptive data.

## Claims

1. A method for providing a summary of data relating to a merger or acquisition via an interface to a database, comprising the steps of:
(a) identifying a plurality of issues relating to a merger or acquisition;
(b) determining a plurality of milestones associated with the merger or acquisition.
(c) identifying a plurality of projects corresponding to the merger or acquisition;
(d) gauging a progress of the projects in terms of a plurality of criterion; and
(e) outputting the issues, the milestones, and the gauged progress of the projects.

2. A method as recited in claim 1, wherein the issues and milestones are graphically depicted.

3. A method as recited in claim 2, wherein the milestones are differentiated in terms of being planned and made.

4. A method as recited in claim 2, wherein the issues are differentiated in terms of being open, late, and resolved.

5. A method as recited in claim 1, wherein the projects include customers, customer service, employees, financials, and technology.

6. A method as recited in claim 1, wherein the criteria includes not started, on schedule, behind schedule, at risk, not applicable, and complete.

7. A system for providing a summary of data relating to a merger or acquisition via an interface to a database, comprising:
(a) logic that identifies a plurality of issues relating to a merger or acquisition;
(b) logic that determines a plurality of milestones associated with the merger or acquisition;
(c) logic that identifies a plurality of projects corresponding to the merger or acquisition;
(d) logic that gauges a progress of the projects in terms of a plurality of criterion; and
(e) logic that outputs the issues, the milestones, and the gauged progress of the projects.

8. A system as recited in claim 7, wherein the issues and milestones are graphically depicted.

9. A system as recited in claim 8, wherein the milestones are differentiated in terms of being planned and made.

10. A system as recited in claim 8, wherein the issues are differentiated in terms of being open, late, and resolved.

11. A system as recited in claim 7, wherein the projects include customers, customer service, employees, financials, and technology.

12. A system as recited in claim 7, wherein the criteria includes not started, on schedule, behind schedule, at risk, not applicable, and complete.

13. A computer program embodied on a computer-readable medium for causing a computer to execute the method of any one of claims 1 to 6.
